# EUROPEAN PATENT SPECIFICATION

(11) **EP 4 446 130 B1**
(45) Date of publication and mention of the grant of the patent: **14.01.2026**
(21) Application number: 24168268.1
(22) Date of filing: 03.04.2024
(51) Int. Cl.: B60C 11/03, B60C 11/13

(54) **TIRE**
REIFEN
PNEUMATIQUE

(30) Priority: 13.04.2023 JP 2023065852
(43) Date of publication of application: 16.10.2024
(73) Proprietor: Sumitomo Rubber Industries, Ltd., Kobe-shi, Hyogo 651-0072 (JP)
(72) Inventor: MORI, Kazuma, Kobe-shi, 651-0072 (JP)
(74) Representative: Manitz Finsterwald Patent- und Rechtsanwaltspartnerschaft mbB

(56) References cited:
- EP-A1- 2 011 671
- JP-A- H0 776 203
- US-A1- 2008 092 999
- US-A1- 2021 070 107

## Description

### BACKGROUND OF THE INVENTION

### Field of the Invention

The present invention relates to a tire.

### Background Art

A tread portion of a tire includes circumferential grooves extending in a tire circumferential direction for drainage. However, the circumferential grooves have been known to cause air column resonance during running on a dry road surface. To suppress the air column resonance, a pneumatic tire in which a resonator including an air chamber and a narrowed neck is provided in a tread portion thereof, is proposed (see Japanese Patent No. 5013731). EP 2011671 Al discloses another pneumatic tire including a circumferential groove and resonators which are open to the circumferential groove.

In the case where the above-described resonator is provided in the tread portion, block stiffness or the like of the tread portion is decreased, and thus there is a problem that uneven wear such as heel-and-toe wear is likely to occur.

The present invention has been made in view of the above-described problem, and a main object of the present invention is to provide a tire capable of improving noise performance while suppressing uneven wear.

### SUMMARY OF THE INVENTION

The present invention is directed to a tire including a tread portion, wherein the tread portion includes a circumferential groove extending in a tire circumferential direction and a land portion adjacent to the circumferential groove, the circumferential groove includes a first groove wall defining a side wall surface of the land portion, the land portion includes a ground-contact surface connected to the first groove wall, a longitudinal hole and two or more lateral holes are provided in the land portion, the longitudinal hole has a longitudinal hole opening having a closed contour on the ground-contact surface and extends inward in a tire radial direction from the longitudinal hole opening, and each of the two or more lateral holes has a lateral hole opening having a closed contour on a surface of the first groove wall and extends in a tire axial direction from the lateral hole opening so as to communicate with the longitudinal hole. A total area of the lateral hole openings of the two or more lateral holes is 20 to 60% of an area of the longitudinal hole opening.

As a result of adopting the above configuration, the tire according to the present invention can improve noise performance while suppressing uneven wear of the land portion.

### BRIEF DESCRIPTION OF THE DRAWINGS

FIG. 1 is a development view of a tread portion of a tire according to one embodiment of the present invention;
FIG. 2 is a partial perspective view of the tread portion;
FIG. 3 is a side view of FIG. 2 as viewed from a first groove wall side;
FIG. 4 is a sectional view taken along a line IV-IV in FIG. 3; and
FIG. 5 is a sectional view taken along a line V-V in FIG. 1.

### DETAILED DESCRIPTION

One embodiment of the present invention will be described below with reference to the drawings.

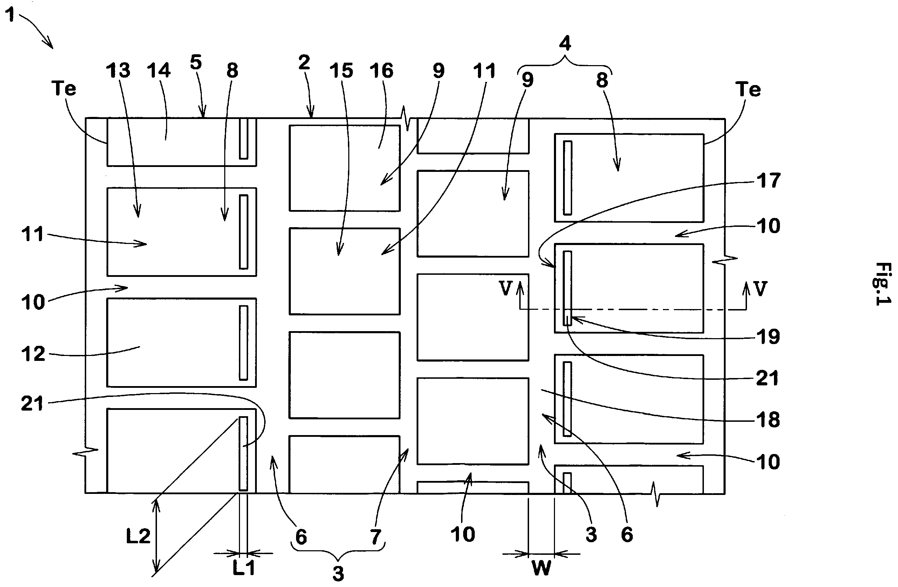

FIG. 1 is a development of a tread portion 2 of a tire 1 showing one embodiment of the present invention. The tire 1 of the present embodiment is a pneumatic tire, and is preferably a tire for a vehicle that is required to provide quietness, and particularly, a pneumatic tire for a passenger car. As shown in FIG. 1, the tread portion 2 includes a pair of tread edges Te, Te, a plurality of circumferential grooves 3 extending in a tire circumferential direction between the pair of tread edges Te, Te, and land portions 4 demarcated by the circumferential grooves 3.

The pair of tread edges Te, Te correspond to outermost edges in a tire axial direction of a ground-contact surface 5 when 70% of a standardized load is applied to the tire 1 in a standardized state and the tread portion 2 is brought into contact with a plane at a camber angle of 0°.

In the case of a pneumatic tire for which various standards are defined, the "standardized state" is a state where the tire is fitted on a standardized rim and inflated to a standardized internal pressure and no load is applied to the tire. In the case of a non-pneumatic tire and a tire for which various standards are not defined, the standardized state represents a standard use state which corresponds to a purpose of use of the tire and in which no load is applied to the tire. In the present specification, unless otherwise specified, dimensions and the like of components of the tire are values measured in the standardized state.

The "standardized rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

In the case of a pneumatic tire for which various standards are defined, the "standardized load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In addition, in the case of a tire for which various standards are not defined, the "standardized load" refers to the maximum load applicable when the tire is used, according to the above-described standards.

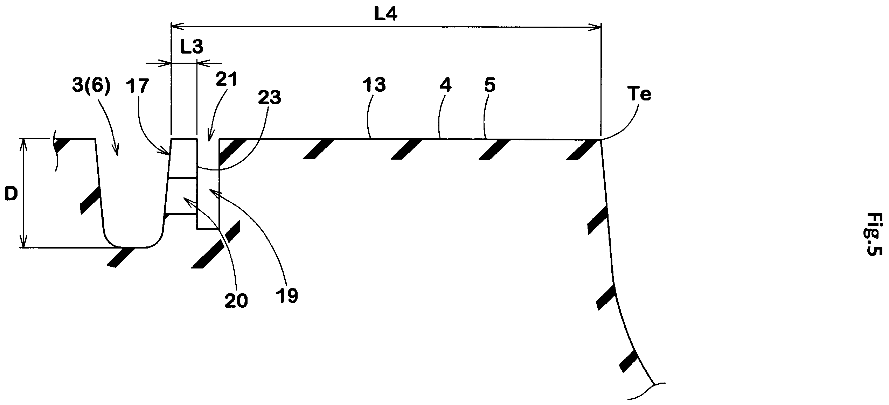

In the present embodiment, the circumferential grooves 3 include a pair of shoulder circumferential grooves 6, and one or more crown circumferential grooves 7 disposed between the pair of shoulder circumferential grooves 6. A groove width W of each circumferential groove 3 is not particularly limited, but is, for example, not less than 3.0 mm and preferably not less than 4.0 mm, in order to ensure sufficient drainage performance and enhance resistance to hydroplaning. The groove width W is a groove width at the ground-contact surface 5 of the tread portion 2. In addition, a depth D (shown in FIG. 5) of the circumferential groove 3 is also not particularly limited, but is, for example, not less than 5.0 mm and preferably not less than 6.0 mm. The circumferential groove 3 of the present embodiment linearly extends along the tire circumferential direction, but is not limited to such a mode.

In the present embodiment, the land portions 4 include a pair of shoulder land portions 8, and a pair of crown land portions 9 disposed between the pair of shoulder land portions 8. Each land portion 4 includes a plurality of lateral grooves 10 extending in the tire axial direction. Thus, the land portion 4 is formed as a block array 12 in which a plurality of blocks 11 are arranged in the tire circumferential direction. That is, each shoulder land portion 8 and each crown land portion 9 of the present embodiment are respectively formed as a shoulder block array 14 in which shoulder blocks 13 are arranged in the tire circumferential direction and a crown block array 16 in which crown blocks 15 are arranged in the tire circumferential direction. In another mode, the shoulder land portion 8 and/or the crown land portion 9 may be formed as ribs (not shown) continuously extending in the tire circumferential direction.

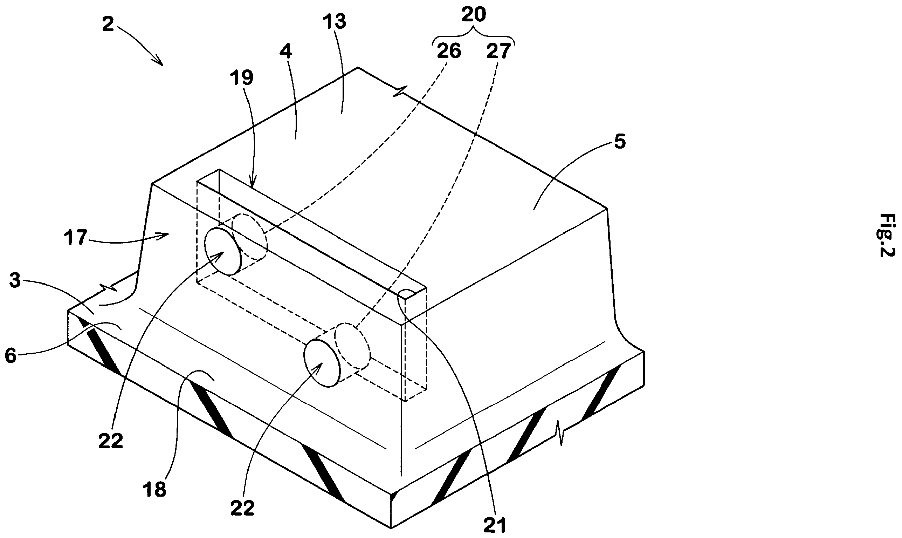

FIG. 2 shows a partial perspective view of the tread portion 2 including the right-side shoulder circumferential groove 6 and one shoulder block 13 adjacent to the right-side shoulder circumferential groove 6 in FIG. 1. As shown in FIG. 2, in the present embodiment, the shoulder circumferential groove 6 as the circumferential groove 3 has a first groove wall 17 and a groove bottom 18. The first groove wall 17 defines a side wall surface of the shoulder block 13 of the land portion 4. That is, the first groove wall 17 is also a side wall surface on the shoulder circumferential groove 6 side of the shoulder block 13. In addition, the ground-contact surface 5 of the shoulder block 13 is connected to the first groove wall 17.

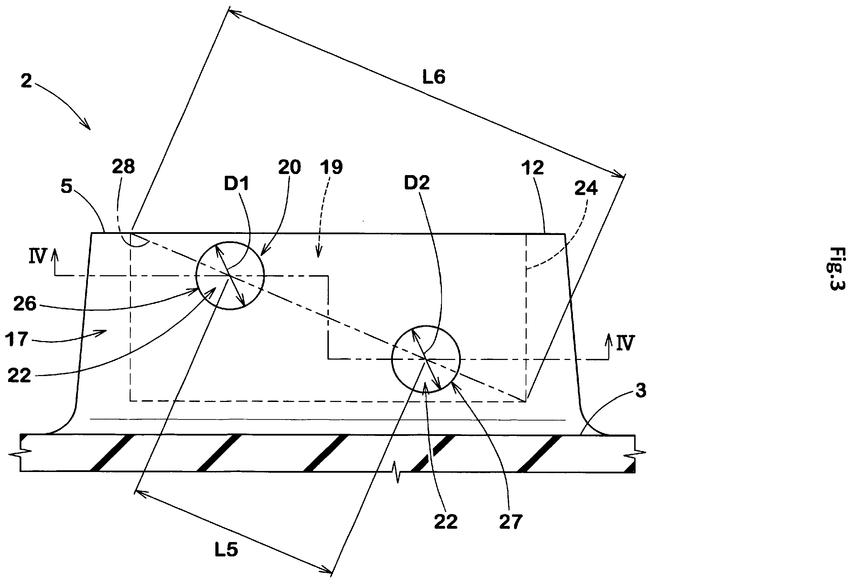

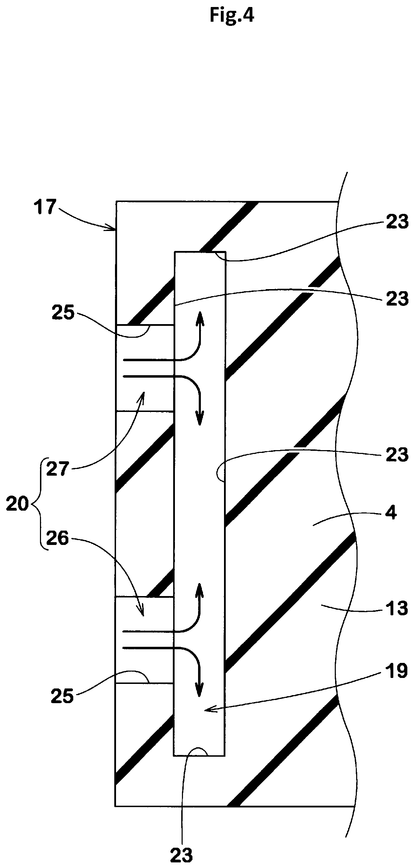

FIG. 3 is a side view of FIG. 2 as viewed from the first groove wall 17 side. FIG. 4 is a sectional view taken along a line IV-IV in FIG. 3. In FIG. 4, arrows indicate one mode of flows of air. As shown in FIGS. 2 to 4, one longitudinal hole 19 and two or more lateral holes 20 connected to the longitudinal hole 19 are provided in the shoulder block 13. In the present embodiment, the two lateral holes 20 communicate with the one longitudinal hole 19.

The longitudinal hole 19 has a longitudinal hole opening 21 having a closed contour on the ground-contact surface 5 of the shoulder block 13. The longitudinal hole opening 21 of the present embodiment is formed as an independent closed curve without communicating with any surrounding edges of the ground-contact surface 5 of the shoulder block 13. In addition, the longitudinal hole 19 is formed as a space extending inward in the tire radial direction from the longitudinal hole opening 21.

The two or more lateral holes 20 each have a lateral hole opening 22 having a closed contour on the first groove wall 17. The lateral hole openings 22 of the present embodiment are formed as independent closed curves without communicating with each other. In addition, each lateral hole 20 is formed as a space extending in the tire axial direction from the lateral hole opening 22 and communicating with the longitudinal hole 19.

Effects of the tire 1 configured as described above of the present embodiment are as follows. First, since the two or more lateral holes 20 extend in the tire axial direction from the lateral hole openings 22 and communicate with the longitudinal hole 19, a part of air flowing in the circumferential groove 3 (shoulder circumferential groove 6) enters the lateral holes 20 via the lateral hole openings 22 and flows into the longitudinal hole 19 during running with the tire. In addition, the air that has flowed into the longitudinal hole 19 exhibits pressure loss. Sound energy in the circumferential groove 3 is eliminated by this pressure loss, and thus air column resonance sound during running is reduced. The above effect can be obtained when the longitudinal hole 19 is not completely closed with the ground.

In addition, in the tire 1 of the present embodiment, the longitudinal hole 19 and the two or more lateral holes 20 respectively have the longitudinal hole opening 21 having a closed contour on the ground-contact surface 5 of the land portion 4 (shoulder block 13) and the lateral hole openings 22 each having a closed contour on the first groove wall 17. Furthermore, the two or more lateral holes 20 separately connect to the one longitudinal hole 19, whereby the respective lateral hole openings 22 can be formed small. With the above configuration, a decrease in stiffness of the land portion 4 in which the longitudinal hole 19 and the lateral holes 20 are provided is suppressed, and thus uneven wear of the land portion 4 can be suppressed.

Therefore, the tire 1 of the present embodiment can improve noise performance while suppressing uneven wear of the land portion 4 (shoulder block 13). In the above embodiment, the shoulder block 13 as an object for describing the land portion 4, and the shoulder circumferential groove 6 as an object for describing the circumferential groove 3 are used. However, the present invention is not limited thereto. For example, instead of the shoulder block 13, the crown block 15 may be the land portion 4 in which the longitudinal hole 19 and the lateral holes 20 are provided, or both the shoulder block 13 and the crown block 15 may be such land portions 4. Similarly, the circumferential groove 3 at which the lateral holes 20 are provided may be the crown circumferential groove 7. Furthermore, the land portion 4 may be formed as a rib.

Hereinafter, more preferable modes of the present invention will be described.

As shown in FIG. 1, the longitudinal hole opening 21 preferably has a longitudinally elongated shape having a width L1 in the tire axial direction smaller than a length L2 in the tire circumferential direction. In particular, the longitudinal hole opening 21 preferably has a longitudinally elongated rectangular shape. Such a longitudinal hole opening 21 serves to suppress a decrease in stiffness and further improve uneven wear resistance, of the shoulder block 13 as the land portion 4.

The width L1 in the tire axial direction of the longitudinal hole opening 21 is preferably set to be smaller than the groove width W of the circumferential groove 3. In a more preferable mode, the width L1 in the tire axial direction of the longitudinal hole opening 21 is, for example, set to be 1.5 to 2.5 mm. Such a longitudinal hole opening 21 serves to suppress a decrease in stiffness and further improve uneven wear resistance, of the shoulder block 13 as the land portion 4.

FIG. 5 is a sectional view taken along a line V-V in FIG. 1. As shown in FIG. 2 and FIG. 5, the longitudinal hole 19 has a slit shape having a draft angle or the like but extending inward in the tire radial direction substantially in the contour of the longitudinal hole opening 21. Such a longitudinal hole shape serves to suppress a decrease in stiffness and further improve uneven wear resistance, of the shoulder block 13 as the land portion 4. As shown in FIG. 3, a shape obtained by projecting the longitudinal hole 19 of the present embodiment on the first groove wall 17 in parallel to the tire axial direction is a rectangular shape 24 as indicated by broken lines.

As shown in FIG. 5, a shortest distance L3 in the tire axial direction between the first groove wall 17 and a groove wall 23 of the longitudinal hole 19 is preferably 10 to 30% of a width L4 in the tire axial direction of the shoulder block 13. In the present embodiment, the width L4 in the tire axial direction of the shoulder block 13 is a maximum width in the tire axial direction of the ground-contact surface 5 of the shoulder block 13 (land portion 4). When the shortest distance L3 in the tire axial direction between the first groove wall 17 and the groove wall 23 of the longitudinal hole 19 is not less than 10% of the width L4 in the tire axial direction of the shoulder block 13, the thickness of rubber between the shoulder circumferential groove 6 and the shoulder block 13 is sufficiently ensured, and thus uneven wear of the shoulder block 13 can be suppressed. Meanwhile, when the shortest distance L3 in the tire axial direction between the first groove wall 17 and the groove wall 23 of the longitudinal hole 19 is not more than 30% of the width L4 in the tire axial direction of the shoulder block 13, no longitudinal hole 19 is disposed at the center, in which ground-contact pressure with respect to the ground-contact surface 5 becomes relatively high, of the shoulder block 13, and thus a decrease in steering stability can be suppressed.

As shown in FIG. 2 and FIG. 3, the lateral hole openings 22 are each formed in a circular shape, for example. In addition, the lateral holes 20 extend straight from the lateral hole openings 22 and communicate with the longitudinal hole 19. Accordingly, the lateral holes 20 of the present embodiment are each a cylindrical space. However, each lateral hole 20 is not limited to such a mode, and may be a rectangular parallelepiped or cubic space.

As shown in FIG. 3 and FIG. 4, the lateral holes 20 of the present embodiment include a first lateral hole 26, and a second lateral hole 27 provided inward of the first lateral hole 26 in the tire radial direction. When the tread portion 2 is worn due to running with the tire 1, the first lateral hole 26 may disappear. Even in such a case, a part of air flowing in the circumferential groove 3 can flow into the longitudinal hole 19 through the second lateral hole 27. Therefore, according to the present embodiment, the above-described effect can be maintained even if the tread portion 2 is worn. In addition, air can be discharged from different positions in the circumferential direction and the depth direction of the circumferential grooves 3, whereby air discharging performance is improved and noise due to air column resonance can be further suppressed.

The volume of the first lateral hole 26 is preferably set to be equal to the volume of the second lateral hole 27. In such a mode, the amounts of air flowing into the longitudinal hole 19 through the lateral holes 20, respectively, are less likely to be different from each other, and thus the air is likely to spread in the longitudinal hole 19 in a well-balanced manner. Therefore, pressure loss is effectively generated, and thus the sound energy in the circumferential groove 3 disappears and the effect of reducing air column resonance sound can also be increased.

The total area of the lateral hole openings 22 of the two or more lateral holes 20 (i.e., all the lateral holes 20 communicating with one longitudinal hole 19) is preferably 20 to 60% of the area of the longitudinal hole opening 21 (shown in FIG. 2). When the total area of the lateral hole openings 22 is not less than 20% of the area of the longitudinal hole opening 21, a sufficient amount of air is allowed to flow into the longitudinal hole 19 from the circumferential groove 3, and air column resonance sound can be more effectively reduced. In addition, when the total area of the lateral hole opening 22 is not more than 60% of the area of the longitudinal hole opening 21, stiffness of the land portion 4 is sufficiently ensured and uneven wear of the land portion 4 can be suppressed while maintaining pressure loss.

A maximum diameter D1 of the lateral hole opening 22 of the first lateral hole 26 and a maximum diameter D2 of the lateral hole opening 22 of the second lateral hole 27 may be determined in consideration of pressure loss due to friction caused when air is passing through the lateral hole 20. As shown in FIG. 4, air from the circumferential groove 3 also has pressure loss due to friction with an inner peripheral surface 25 of the lateral hole 20, when the air passes through each lateral hole 20. The maximum diameter D1 of the lateral hole opening 22 of the first lateral hole 26 and the maximum diameter D2 of the lateral hole opening 22 of the second lateral hole 27 influence generation of pressure loss due to this friction. From this viewpoint, each of the maximum diameter D1 of the lateral hole opening 22 of the first lateral hole 26 and the maximum diameter D2 of the lateral hole opening 22 of the second lateral hole 27 is, for example, 2.0 to 6.0 mm. Thus, pressure loss due to friction with the inner peripheral surface 25 of the lateral hole 20 can be effectively utilized to further effectively reduce air column resonance sound.

As shown in FIG. 3 and FIG. 4, a separation distance L5 between the lateral hole openings 22 of the two or more lateral holes 20 is preferably 15 to 30% of a length L6 of a diagonal line 28 of the rectangular shape 24 obtained by projecting the longitudinal hole 19 on the first groove wall 17 in parallel to the tire axial direction. The separation distance L5 is defined as a distance between the centroids of the lateral hole openings 22 adjacent to each other. When the separation distance L5 is not less than 15% of the length L6, air flowing into the longitudinal hole 19 from one of the two or more lateral holes 20 and air flowing into the longitudinal hole 19 from the other of the two or more lateral holes 20 are less likely to interfere with each other, and pressure loss is effectively generated. Meanwhile, when the separation distance L5 is not more than 30% of the length L6, the maximum diameter D1 of the lateral hole opening 22 of the first lateral hole 26 and the maximum diameter D2 of the lateral hole opening 22 of the second lateral hole 27 can be set in the above magnitude range. Thus, a sufficient amount of air is allowed to flow into the longitudinal hole 19 from the circumferential groove 3, and air column resonance sound can be more effectively reduced.

From the viewpoint of setting the separation distance L5 between the lateral hole openings 22 of the two or more lateral holes 20 to be longer as described above, the two or more lateral holes 20 are preferably each disposed on the diagonal line 28 of the rectangular shape 24. In a more preferable example, the center of the first lateral hole 26 and the center of the second lateral hole 27 are disposed on the diagonal line 28. Thus, air flowing into the longitudinal hole 19 through the two lateral holes 20 is likely to spread in the longitudinal hole 19 in a well-balanced manner. Therefore, pressure loss is increased, sound energy disappears in the circumferential groove 3, and thus the effect of reducing air column resonance sound is increased.

Although one embodiment of the present invention has been described in detail above, the present invention is not limited to the above specific embodiment, and various modifications can be made to implement the present invention, which is defined in the appended claims.

## Claims

1. A tire (1) comprising a tread portion (2), wherein
the tread portion (2) includes a circumferential groove (3) extending in a tire circumferential direction and a land portion (4) adjacent to the circumferential groove (3),
the circumferential groove (3) includes a first groove wall (17) defining a side wall surface of the land portion (4),
the land portion (4) includes a ground-contact surface (5) connected to the first groove wall (17),
a longitudinal hole (19) and two or more lateral holes (20) are provided in the land portion (4),
the longitudinal hole (19) has a longitudinal hole opening (21) having a closed contour on the ground-contact surface (5) and extends inward in a tire radial direction from the longitudinal hole opening (21), and
each of the two or more lateral holes (20) has a lateral hole opening (22) having a closed contour on a surface of the first groove wall (17) and extends in a tire axial direction from the lateral hole opening (22) so as to communicate with the longitudinal hole (19),
**characterized in that** a total area of the lateral hole openings (22) of the two or more lateral holes (20) is 20 to 60% of an area of the longitudinal hole opening (21).

2. The tire (1) according to claim 1, wherein a maximum diameter (D1, D2) of each lateral hole opening (22) is 2.0 to 6.0 mm.

3. The tire (1) according to any one of claims 1 to 2, wherein
a shape obtained by projecting the longitudinal hole (19) on the first groove wall (17) is a rectangular shape, and
a separation distance (L5) between the lateral hole openings (22) of the two or more lateral holes (20) is 15 to 30% of a length (L6) of a diagonal line (28) of the rectangular shape.

4. The tire (1) according to claim 3, wherein the two or more lateral holes (20) are each disposed on the diagonal line (28) of the rectangular shape.

5. The tire (1) according to any one of claims 1 to 4, wherein the two or more lateral holes (20) include a first lateral hole (26), and a second lateral hole (27) provided inward of the first lateral hole (26) in the tire radial direction.

6. The tire (1) according to any one of claims 1 to 5, wherein the land portion (4) includes a block (11) demarcated by lateral grooves (10) extending in the tire axial direction.

7. The tire (1) according to claim 6, wherein a shortest distance (L3) in the tire axial direction between the first groove wall (17) and a groove wall (23) of the longitudinal hole (19) is 10 to 30% of a width (L4) in the tire axial direction of each of the blocks (11).

## Patentansprüche

1. Reifen (1), der einen Laufflächenabschnitt (2) umfasst, wobei
der Laufflächenabschnitt (2) eine Umfangsrille (3), die sich in einer Reifenumfangsrichtung erstreckt, und einen Landabschnitt (4) benachbart zu der Umfangsrille (3) umfasst,
die Umfangsrille (3) eine erste Rillenwand (17) umfasst, die eine Seitenwandfläche des Landabschnitts (4) definiert,
der Landabschnitt (4) eine Bodenkontaktfläche (5) umfasst, die mit der ersten Rillenwand (17) verbunden ist,
ein Längsloch (19) und zwei oder mehr Querlöcher (20) in dem Landabschnitt (4) vorgesehen sind,
das Längsloch (19) eine Längslochöffnung (21) mit einer geschlossenen Kontur auf der Bodenkontaktfläche (5) aufweist und sich in einer Reifenradialrichtung von der Längslochöffnung (21) nach innen erstreckt, und
jedes der zwei oder mehr Querlöcher (20) eine Querlochöffnung (22) mit einer geschlossenen Kontur auf einer Fläche der ersten Rillenwand (17) aufweist und sich in einer Reifenaxialrichtung von der Querlochöffnung (22) erstreckt, so dass es mit dem Längsloch (19) kommuniziert,
**dadurch gekennzeichnet, dass** eine Gesamtfläche der Querlochöffnungen (22) der zwei oder mehr Querlöcher (20) 20 bis 60 % einer Fläche der Längslochöffnung (21) beträgt.

2. Reifen (1) nach Anspruch 1, wobei ein maximaler Durchmesser (D1, D2) jeder Querlochöffnung (22) 2,0 bis 6,0 mm beträgt.

3. Reifen (1) nach einem der Ansprüche 1 bis 2, wobei
eine Form, die durch Projizieren des Längslochs (19) auf die erste Rillenwand (17) erhalten wird, eine rechteckige Form ist, und
ein Trennungsabstand (L5) zwischen den Querlochöffnungen (22) der zwei oder mehr Querlöcher (20) 15 bis 30 % einer Länge (L6) einer Diagonallinie (28) der rechteckigen Form beträgt.

4. Reifen (1) nach Anspruch 3, wobei die zwei oder mehr Querlöcher (20) jeweils auf der Diagonallinie (28) der rechteckigen Form angeordnet sind.

5. Reifen (1) nach einem der Ansprüche 1 bis 4, wobei die zwei oder mehr Querlöcher (20) ein erstes Querloch (26) und ein zweites Querloch (27), das in der Reifenradialrichtung von dem ersten Querloch (26) innen vorgesehen ist, umfassen.

6. Reifen (1) nach einem der Ansprüche 1 bis 5, wobei der Landabschnitt (4) einen Block (11) umfasst, der durch Querrillen (10), die sich in der Reifenaxialrichtung erstrecken, abgegrenzt ist.

7. Reifen (1) nach Anspruch 6, wobei ein kürzester Abstand (L3) in der Reifenaxialrichtung zwischen der ersten Rillenwand (17) und einer Rillenwand (23) des Längslochs (19) 10 bis 30 % einer Breite (L4) in der Reifenaxialrichtung jedes der Blöcke (11) beträgt.

## Revendications

1. Pneumatique (1) comprenant une portion formant bande de roulement (2), dans lequel
la portion formant bande de roulement (2) inclut une rainure circonférentielle (3) s'étendant dans une direction circonférentielle du pneumatique et une portion en relief (4) adjacente à la rainure circonférentielle (3),
la rainure circonférentielle (3) inclut une première paroi de rainure (17) définissant une surface formant paroi latérale de la portion en relief (4),
la portion en relief (4) inclut une surface de contact au sol (5) connectée à la première paroi de rainure (17),
un trou longitudinal (19) et deux ou plusieurs trous latéraux (20) sont prévus dans la portion en relief (4),
le trou longitudinal (19) a une ouverture de trou longitudinal (21) ayant un contour fermé sur la surface de contact au sol (5) et s'étend vers l'intérieur dans une direction radiale du pneumatique depuis l'ouverture de trou longitudinal (21), et
chacun des deux ou plusieurs trous latéraux (20) a une ouverture de trou latéral (22) ayant un contour fermé sur une surface de la première paroi de rainure (17) et s'étend dans une direction axiale du pneumatique depuis l'ouverture de trou latéral (22) de manière à communiquer avec le trou longitudinal (19),
**caractérisé en ce que**
une aire totale des ouvertures de trou latéral (21) des deux ou plusieurs trous latéraux (20) est de 20 à 60 % d'une aire de l'ouverture de trou longitudinal (21).

2. Pneumatique (1) selon la revendication 1, dans lequel un diamètre maximum (D1, D2) de chaque ouverture de trou latéral (22) est de 2,0 à 6,0 mm.

3. Pneumatique (1) selon l'une quelconque des revendications 1 à 2, dans lequel
une forme obtenue en projetant le trou longitudinal (19) sur la première paroi de rainure (17) est une forme rectangulaire, et
une distance de séparation (L5) entre les ouvertures de trou latéral (22) des deux ou plusieurs trous latéraux (20) est de 15 à 30 % d'une longueur (L6) d'une ligne diagonale (28) de la forme rectangulaire.

4. Pneumatique (1) selon la revendication 3, dans lequel les deux ou plusieurs trous latéraux (20) sont chacun disposés sur la ligne diagonale (28) de la forme rectangulaire.

5. Pneumatique (1) selon l'une quelconque des revendications 1 à 4, dans lequel les deux ou plusieurs trous latéraux (20) incluent un premier trou latéral (26) et un second trou latéral (27) prévu à l'intérieur du premier trou latéral (26) dans la direction radiale du pneumatique.

6. Pneumatique (1) selon l'une quelconque des revendications 1 à 5, dans lequel la portion en relief (4) inclut un bloc (11) délimité par des rainures latérales (10) s'étendant dans la direction axiale du pneumatique.

7. Pneumatique (1) selon la revendication 6, dans lequel une distance la plus courte (L3) dans la direction axiale du pneumatique entre la première paroi de rainure (17) et une paroi de rainure (23) du trou longitudinal (19) est de 10 à 30 % d'une largeur (L4) dans la direction axiale du pneumatique de chacun des blocs (11).
